# EUROPÄISCHE PATENTSCHRIFT

(11) **EP 4 423 374 B1**
(45) Veröffentlichungstag und Bekanntmachung des Hinweises auf die Patenterteilung: **18.06.2025**
(21) Anmeldenummer: 22800580.7
(22) Anmeldetag: 25.10.2022
(51) Int. Cl.: F02C 3/22, F02C 3/30, F02C 7/224, F02K 5/00

(54) **FLUGZEUGTRIEBWERK**
AIRCRAFT ENGINE
MOTEUR D'AÉRONEF

(30) Priorität: 26.10.2021 DE 102021127893
(43) Veröffentlichungstag der Anmeldung: 04.09.2024
(73) Patentinhaber: Kahle GmbH, 21337 Lüneburg (DE)
(72) Erfinder: LEHMANN, Niko, 21379 Scharnebeck (DE)
(74) Vertreter: Spahn, Tobias
(86) Internationale Anmeldenummer: PCT/DE2022/100794
(87) Internationale Veröffentlichungsnummer: WO 2023/072344

(56) Entgegenhaltungen:
- DE-A1- 102019 216 905
- GB-A- 2 594 072
- US-A- 5 351 480
- US-A1- 2015 308 383

## Beschreibung

### Technisches Gebiet

Die Erfindung betrifft ein Flugzeugtriebwerk für Verkehrsflugzeuge.

### Stand der Technik

In der zivilen Luftfahrt besteht ein Bedarf für Antriebe, die frei von klimaschädlichen Emissionen sind, insbesondere für CO₂-freie Antriebe. Insoweit sind im Stand der Technik brennstoffzellenbasierte Antriebe bekannt, bei denen die erforderliche Schubkraft über ein elektrisch betriebenes Axialgebläse erzeugt wird. Für den Einsatz in Verkehrsflugzeugen besteht hierbei das praktische Problem, dass der Betrieb nicht wirtschaftlich ist. Die zur Bereitstellung der in der Startphase nötigen Maximalleistung erforderliche Kapazität führt infolge des hohen Leistungsgewichts bzw. Masse-Leistungs-Verhältnisses aktuell verfügbarer Brennstoffzellen zu einer für einen wirtschaftlichen Betrieb zu hohen Gesamtmasse. Das Verkehrsflugzeug würde fliegen, könnte aber keine ausreichende Last transportieren.

Die WO 2018/158767 A1 offenbart ein Luftfahrzeug mit einem Wasserstoff-Nachbrenner und wenigstens einem in der Längsachse des Flugzeugs angeordneten Propeller. Die WO 2018/158767 A1 offenbart keine technische Lösung für die nähere technische Ausgestaltung oder die Betriebsweise der Propeller. Für die Unterbringung des Nachbrenners offenbart die WO 2018/158767 A1 die Anordnung in einem konvergent geformten, d.h., sich in Strömungsrichtung verengenden Gehäuse.

Die EP 2 878 795 A1 offenbart ein Triebwerk zum Antreiben eines Flugzeugs mit einem Gehäuse mit einem Einlass und einem Auslass, einem in diesem angeordneten Gebläse, welches über einen mit einer Brennstoffzellenanordnung koppelbaren Elektromotor angetrieben wird, wobei das Triebwerk einen zusätzlichen Verbrennungsmotor aufweisen kann. Die EP 2 878 795 A1 offenbart keine technischen Lösungen für die körperliche Gestaltung des Gehäuses oder die nähere technische Beschaffenheit und Anordnung des Verbrennungsmotors.

### Offenbarung der Erfindung

Der Erfindung liegt die Aufgabe zu Grunde, ein Flugzeugtriebwerk mit einem brennstoffzellenbasierten, elektrisch betriebenen Axialgebläse bereitzustellen, das nach Art und Aufbau eine Optimierung des Leistungsgewichts ermöglicht und als klimaschonender Antrieb für ein ziviles Verkehrsflugzeug einsetzbar ist.

Die Aufgabe wird erfindungsgemäß gelöst durch ein Flugzeugtriebwerk gemäß Anspruch 1. Vorteilhafte Weiterbildungen der Erfindung sind in den Unteransprüchen angegeben.

Den Kern der Erfindung bildet ein Flugzeugtriebwerk, aufweisend ein Gehäuse mit einem Einlass und einem Auslass, ein benachbart zum Einlass in einem ersten Gehäuseabschnitt angeordnetes Axialgebläse mit mindestens einem Laufrad, mindestens einen Elektromotor, der zum Antrieb des Laufrads ausgebildet ist, mindestens eine Brennstoffzelleneinheit, die zur Stromversorgung des Elektromotors ausgebildet ist, sowie mindestens einen innerhalb des Gehäuses dem Axialgebläse nachgelagert angeordneten Verbrennungsantrieb, wobei das Gehäuse anschließend an den ersten Gehäuseabschnitt mit einem konvergenten Abschnitt und anschließend an den konvergenten Abschnitt mit einem divergenten Abschnitt ausgebildet ist, und wobei der Verbrennungsantrieb eine Verbrennungskammer mit einer Wasserstoffeinspritzung umfasst, welche innerhalb des divergenten Abschnitts angeordnet oder gebildet sind. Nachgelagert bedeutet im Sinne der Erfindung in der Strömungsrichtung vom Einlass zum Auslass nachfolgend angeordnet. Konvergent bedeutet im Sinne der Erfindung sich in Strömungsrichtung verengend, divergent sich in Strömungsrichtung erweiternd. Das erfindungsgemäße Flugzeugtriebwerk besitzt den Vorteil, dass das die Gesamtmasse und damit auch das Leistungsgewicht aufgrund der Kombination eines elektrisch betriebenen und über mindestens eine Brennstoffzelleneinheit versorgten Axialgebläses mit einem als Wasserstoff-Nachbrenner nutzbaren Verbrennungsantrieb einfach optimierbar ist. Die Leistungsauslegung der mindestens einen Brennstoffzelleneinheit und des Axialgebläses wird massebezogen auf den normalen Flugbetrieb hin optimiert, während die in der Startphase erforderliche Maximalleistung durch die Zuschaltung des Wasserstoff-Nachbrenners erreicht wird. Die Anordnung der beiden Antriebe ist aufgrund der körperlichen Ausgestaltung in einem gemeinsamen Gehäuse zudem räumlich hochintegriert und hinsichtlich der Strömungsführung und Schubgenerierung optimiert. Die Integration eines wasserstoffbasierten Verbrennungsantriebs ist zudem wegen der aufgrund des brennstoffzellenbasierten Antriebs ohnehin erforderlichen Anwesenheit von Wasserstoff systemeffizient. Die Lagerung, Bereitstellung und Zuführung eines gesonderten Verbrennungstreibstoffs sind entbehrlich.

Der Elektroantrieb wird effizient und mit einem hohen Wirkungsgrad integriert, indem er Spulenmittel umfasst, die umfangsseitig des Laufrads am oder im Gehäuse angeordnet sind und Permanentmagnetmittel umfasst, die durch die Laufradschaufeln gebildet oder in einem umfangsseitigen Endabschnitt der Laufradschaufeln gebildet oder angeordnet oder die in einem die Laufwerkschaufeln umgreifenden Außenring gebildet oder angeordnet sind. In dieser Ausgestaltung fungiert das Laufrad als innenlaufender Rotor. Der Elektroantrieb ist hierbei reibungsarm als bürstenloser Elektromotor realisiert, da zwischen Rotor und Stator kein leitungsgebundener elektrischer Kontakt, sondern ein Magnetlager gebildet ist.

Zur Optimierung des Wirkungsgrades des Axialgebläses ist dem mindestens einen Laufrad ein zweites, gegenläufig drehendes Laufrad nachgeordnet. Das Prinzip der Gegenläufigkeit erlaubt die Umsetzung einer hohen Leistungsdichte in einer kompakten Bauform.

Zur Optimierung der Luftströmung und Schubwirkung ist dem mindestens einen Laufrad oder dem gegenläufig drehenden Laufradpaar ein Leitrad nachgeordnet. Die aufgrund der Rotation eines Laufrads aus diesem drallbehaftet austretende Luftströmung wird durch die Leitschaufeln des nachgeordnet angeordneten, feststehenden Leitrads in eine laminare, besonders schubwirksamere Luftströmung umgelenkt.

Sofern das Axialgebläse zur Erhöhung der Schubkraft mit mehreren Laufrädern ausgebildet ist, sind diese zur Optimierung des Strömungsweges und der Schubwirkung und/oder der Optimierung des Wirkungsgrades als mehrere, innerhalb das ersten Gehäuseabschnitts hintereinander angeordnete Laufrad-/Leitrad-Kombinationen oder Kombinationen aus gegenläufig drehenden Laufrädern mit oder ohne nachgeordnetem Leitrad ausgestaltet.

Zur Gewährleistung des Betriebs in größeren Flughöhen ist mindestens ein in das Gehäuse integrierter oder als ein externes Bauteil ausgeführter, mit dem Flugzeugtriebwerk zusammenwirkender Verdichter vorgesehen, mit dem der mindestens einen Brennstoffzelleneinheit Luft mit einem gegenüber dem Umgebungsdruck erhöhten Druck zugeführt wird. Hierdurch ist ein ordnungsgemäßer Betrieb der Brennstoffzellen auch in größeren Flughöhen ab etwa 3000 Meter gewährleistet, in denen der Umgebungsdruck erheblich verringert ist. Mit dieser Ausgestaltung ist auch eine generelle Verbesserung des Wirkungsgrades der mindestens einen Brennstoffzelleeinheit unabhängig von der Flughöhe ermöglicht, indem den Brennstoffzellen Luft mit einem definierten, gegenüber dem Umgebungsdruck erhöhten Druck zugeführt wird. Als extern ausgeführter Verdichter ist dieser beispielsweise platzsparend in einer Tragfläche oder dem Leitwerk angeordnet.

In einer konstruktiv integrierten und kompakten Ausgestaltung des Flugzeugtriebwerks ist der Verdichter als ein axialer Endabschnitt eines vorhandenen Laufrades oder durch ein gesondertes Laufrad gebildet, das im ersten Gehäuseabschnitt angeordnet ist. Die Druckerhöhung erfolgt über die Umleitung des von den Laufradschaufeln des Verdichters erzeugten verdichteten Luftstroms über eine entsprechende Kanalführung zu den Brennstoffzellen.

Zur Verbesserung des Wirkungsgrads ist dem als Laufrad ausgeführten Verdichter ein Leitrad nachgeordnet, welches als ein mit flüssigem Wasserstoff durchströmtes Bauteil ausgeführt ist. Wasserstoff besitzt mit -252,9 °C einen sehr niedrigeren Siedepunkt. Das mit flüssigem Wasserstoff durchströmte Bauteil bietet der verdichteten Luft daher eine Wärmesenke, wodurch die bei der Verdichtung entstehende Wärmeenergie wieder abgeführt und in der Bilanz eine isotherme Verdichtung erreicht wird.

Zur weiteren Verbesserung des Wirkungsgrades der mindestens einen Brennstoffzelleneinheit ist ferner mindestens eine Ventileinrichtung vorgesehen, mit welcher der mindestens einen Brennstoffzelleneinheit auch Wasserstoff mit einem gegenüber dem Umgebungsdruck erhöhten Druck zugeführt wird. Verzugsweise erfolgt hierzu die Speicherung des Wasserstoffs mit einem gegenüber dem Umgebungsdruck ausreichenden erhöhten Druckniveau von beispielsweise 6 Bar, , wodurch im Gesamtsystem ein ausreichendes Druckniveau vorhanden ist. Bei anderen Formen der Speicherung kann vor der Zuführung zur mindestens einen Brennstoffzelleneinheit eine Verdichtung durch einen Kompressor erfolgen, bevor der Wasserstoff ventilgesteuerten mit einem definierten Überdruck zugeführt wird.

Versuche haben ergeben, dass ein optimaler Wirkungsgrad bei modernen am Markt verfügbaren Brennstoffzellen mit geschlossener Kathode bei einer Aufladung mit 2 Bar erreicht ist, bei der die Brennstoffzellen eine Stromdichte von bis zu 2 A/cm² oder mehr entwickeln. Zur Optimierung des Wirkungsgrades sind der Verdichter und die Ventileinrichtung daher vorzugsweise derart eingerichtet, dass die Beaufschlagung der mindestens einen Brennstoffzelleneinheit mit Luft und Wasserstoff jeweils mit einem Druck von 2 Bar erfolgt.

Zur weiteren Verbesserung des Wirkungsgrads der Brennstoffzelleneinrichtung ist ferner mindestens eine in das Gehäuse integrierte oder als ein externes Bauteil ausgeführte, mit dem Flugzeugtriebwerk zusammenwirkende Wärmetauscheinrichtung vorgesehen, in der Außenluft über oder durch mit flüssigem Wasserstoff durchströmte Komponenten geleitet und das hierbei entstehende Kondensat der der Brennstoffzelleneinrichtung zugeführten Luft beigemischt wird. Wasserstoff besitzt mit -252,9 °C einen niedrigeren Siedepunkt als Sauerstoff (-183 °C), so dass der im Luftstrom enthaltene Sauerstoff bei der Umströmung der mit flüssigem Wasserstoff durchströmten Komponenten zumindest teilweise kondensiert, d.h. vom gasförmigen in seinen flüssigen Aggregatzustand übergeht. Durch die Beimischung des Kondensats wird eine höhere Sauerstoffsättigung der der Brennstoffzelleneinrichtung zugeführten Luft mit einem erhöhten Sauerstoffanteil von beispielsweise 40% statt 21% erreicht, welcher für die Oxidationsreaktion in der Brennstoffzelleneinrichtung zur Verfügung steht.

Zur Erhöhung der Leistungsdichte ist die mindestens eine Brennstoffzelleneinheit aus mehreren flachen, übereinander angeordneten und miteinander als Stapel verbundenen Brennstoffzellenschichten (auch als "Stack" bezeichnet) gebildet.

In einer konstruktiv hochintegrierten und hochkompakten Ausgestaltung des Flugzeugtriebwerks ist die mindestens eine Brennstoffzelleneinheit im Querschnitt ring- oder kreisabschnittsförmig ausgebildet und eine oder mehrere derartige Brennstoffzelleneinheiten ist oder sind umfangsseitig am Gehäuse angeordnet. Diese Ausführung besitzt bereits aufgrund der konstruktiv-körperlichen Ausführung ferner ein verbessertes Wärmemanagement, weil die in der oder den Brennstoffzelleneinheit(en) während des Betriebs entstehende Wärme im normalen Flugbetrieb (d.h. bei inaktivem Nachbrenner) jedenfalls teilweise per Konvektion über das Gehäuse und die Luftströmung innerhalb des Gehäuses in die das Flugzeugtriebwerk umgebende Atmosphäre abgeführt wird.

Eine zusätzliche Verbesserung der Massebilanz des Flugzeugtriebwerks ist erreicht, indem im Bereich des Übergangs vom konvergenten zum divergenten Abschnitt eine Einrichtung für die Einspritzung des beim Betrieb der mindestens einen Brennstoffzelleneinheit entstehenden Wassers angeordnet ist. Jede Brennstoffzelle ist eine galvanische Zelle, die die chemische Reaktionsenergie des kontinuierlich als Brennstoffes zugeführten Wasserstoffs und des als Oxidationsmittels zugeführten Sauerstoffs in elektrische Energie wandelt, die im erfindungsgemäßen Flugzeugtriebwerk zum Betrieb des Elektromotors verwendet wird. Bei der chemischen Reaktion gemäß der Reaktionsgleichung 2 *H*₂ + O₂ → 2 *H*₂*O* entsteht im Betrieb Wasser. Indem auch das Verbrennungsprodukt Wasser während des Betriebs fortlaufend an die das Flugzeugtriebwerk umgebende Atmosphäre abgeben wird, wird das Flugzeug wird während des Fluges ständig leichter. Dies erfolgt besonders effektiv, indem die Einspritzung im Bereich des Übergangs vom konvergenten zum divergenten Abschnitt des Gehäuses erfolgt, da eine unmittelbare Expansion des Fluidstroms erfolgt.

Weitere Vorteile der Erfindung sind nachstehend gemeinsam mit der Beschreibung eines bevorzugten Ausführungsbeispiels der Erfindung anhand der Figuren näher dargestellt. Es zeigen:
- Fig. 1: eine schematische perspektivische Darstellung eines Flugzeugtriebwerks.
- Fig. 2: eine schematische perspektivische Schnittdarstellung des Flugzeugtriebwerks gemäß Fig. 1.
- Fig. 3: eine Frontaldarstellung des Flugzeugtriebwerks gemäß Fig. 1.
- Fig. 4: eine schematische Längsschnitt-Darstellung des Flugzeugtriebswerks entlang der Linie I-I gemäß Fig. 3.

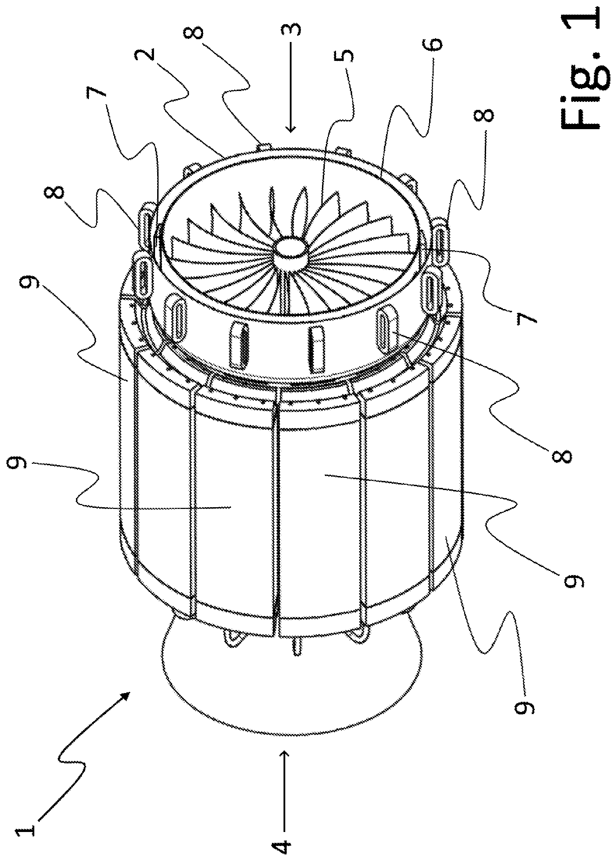

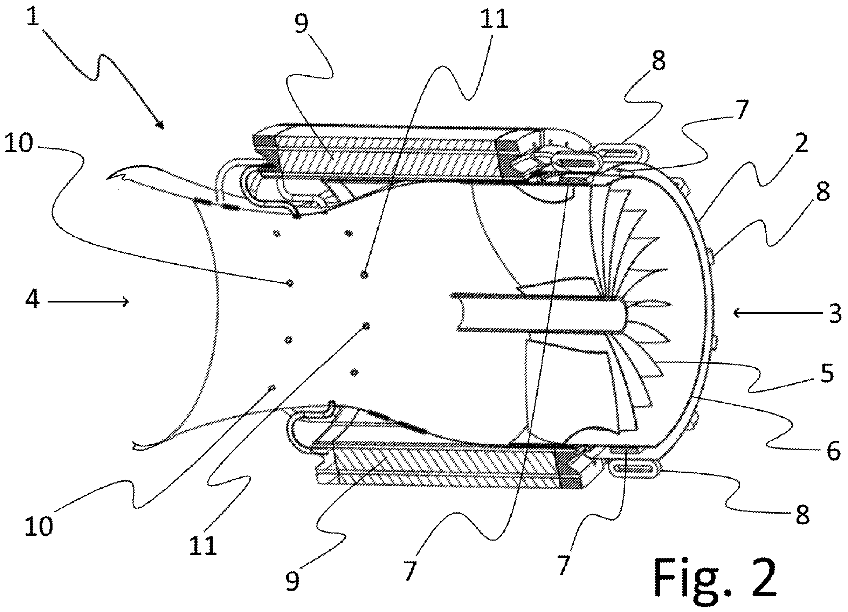

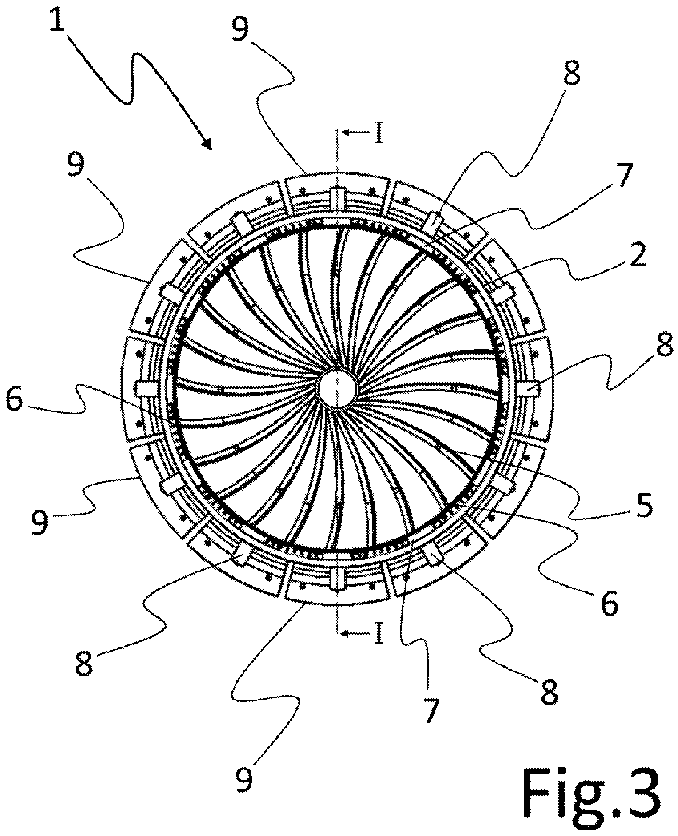

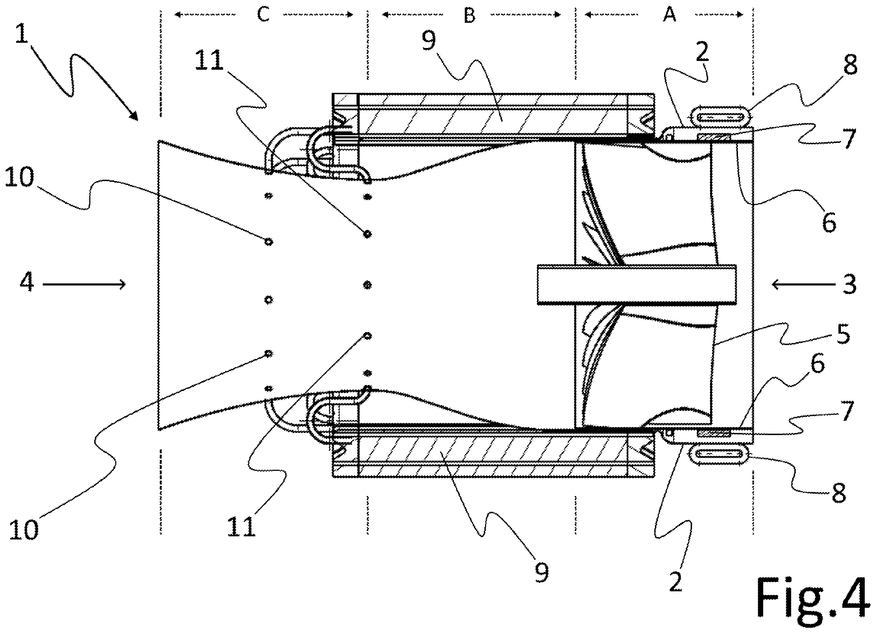

Die Fig. 1 bis 4 zeigen das Flugzeugtriebwerk 1 in unterschiedlichen Ansichten. Fig. 1 zeigt das Flugzeugtriebwerk 1 in einer schematischen perspektivischen Ansicht. Fig. 2 zeigt das Flugzeugtriebwerk 1 in derselben Perspektive als schematische Schnittansicht. Fig. 3 zeigt das 1 zeigt das Flugzeugtriebwerk 1 in einer schematischen Frontansicht. Fig. 4 zeigt das 1 zeigt das Flugzeugtriebwerk 1 in einer schematischen Längsschnittansicht entlang der Linie I-I gemäß Fig. 3.

Das Flugzeugtriebwerk 1 umfasst ein Gehäuse 2 mit einem Einlass 3 und einem Auslass 4, dessen axiale Gehäuseabschnitte A bis C in der Längsschnittdarstellung gemäß Fig. 4 dargestellt sind. Im einlassseitig ersten Gehäuseabschnitt A ist ein ein Axialgebläse bildendes Laufrad 5 angeordnet. Das Laufrad 5 bildet in seiner Mitte eine Nabe, die zur drehbeweglichen Lagerung auf einem konzentrisch angeordneten, statischen Bauteil oder Bauteilverbund, beispielsweise einer Achse oder einem Zapfen geführt ist. Derartige Bauteile sind in den Darstellungen der Fig. 1 bis 4 zu Gunsten einer besseren Übersichtlichkeit nicht dargestellt. Derartige Lagerungsteile können im Gehäuse 2 beispielsweise mittels sich in Umfangsrichtung zur Innenfläche des Gehäuses 2 erstreckenden und mit dieser verbundenen Streben montiert sein. Eine alternative Lagerung kann beispielsweise über eine oder einen sich von einem, dem Laufrad 5 nachgeordneten statischen Leitrad erstreckenden Achse oder einem Zapfen erfolgen (eine solche Ausführung ist in den Darstellungen der Fig. 1 bis 4 nicht dargestellt). Die Schaufelenden des Laufrads 5 sind von einem rohrabschnittsförmigen Außenring 6 umfasst und mit diesem verbunden. Auf der Außenseite des Außenrings 6 sind diesen umlaufend mehrere Permanentmagneten 7 angeordnet, von denen in den Darstellungen der Fig. 2 bis 4 aus darstellungstechnischen Gründen jeweils lediglich einzelne der sichtbaren Permanentmagneten 7 exemplarisch beziffert sind. Vorzugsweise sind die Permanentmagnete als Neodym-Magnete ausgestaltet, die eine hohe Energiedichte und damit ein vorteilhaftes Masse-Energie-Verhältnis besitzen. Ebenfalls im ersten Gehäuseabschnitt A sind am Gehäuse 2 umlaufend mehrere Spulenmittel 8 angeordnet, von denen in den Darstellungen der Fig. 1 bis 4 aus darstellungstechnischen Gründen jeweils lediglich einzelne der sichtbaren Spulenmittel exemplarisch beziffert sind. Das Laufrad 5 bildet mit dem Außenring 6, den Permanentmagneten 7 und den Spulenmitteln 8 einen Elektromotor, der als berührungsloser Gleichstrommotor (= Brushless DC-Motor oder BLDC) ausgebildet ist. Das Laufrad 5 bildet hierbei gemeinsam mit dem Außenring 6 und den Permanentmagneten 7 den als Innenläufer ausgestalteten Rotor des Elektromotors. Die im Gehäuseabschnitt A am Gehäuse 2 umlaufend angeordneten Spulenmitteln 8 bilden gemeinsam den Stator des Elektromotors. Die Steuerung des Elektromotors kann entweder digital mittels einer speicherprogrammierbaren Steuerung (SPS) erfolgen oder elektromechanisch, indem die Ansteuerung der Spulenmittel 8 beispielsweise über induktive oder optische Sensoren erfolgt. Eine elektromechanische Ansteuerung kann je nach gewünschtem Einsatzzweck eine höhere Robustheit ermöglichen.

Zur Stromversorgung des Elektromotors umfasst das Flugzeugtriebwerk 1 mehrere Brennstoffzelleneinheiten 9, die im Querschnitt kreisabschnittsförmig geformt und umfangsseitig am Gehäuse 2 angeordnet sind. In den Darstellungen der Fig. 1 bis 4 sind aus darstellungstechnischen Gründen jeweils lediglich einzelne der sichtbaren Brennstoffzelleneinheiten 9 exemplarisch beziffert. Jede der Brennstoffzelleneinheiten 9 ist jeweils als Stapel durch eine Mehrzahl flacher, jeweils übereinander angeordneter und miteinander verbundener Brennstoffzellenschichten gebildet (auch als "Stack" bezeichnet).

Das Gehäuse 2 umfasst ferner einen an den ersten Gehäuseabschnitt A anschließenden zweiten, konvergent geformten Gehäuseabschnitt B und einen weiteren, an den Gehäuseabschnitt B anschließenden dritten, divergent geformten Gehäuseabschnitt C. Im dritten, divergent geformten Gehäuseabschnitt C ist ein Verbrennungsantrieb angeordnet, der eine Verbrennungskammer und eine Wasserstoffeinspritzung umfasst. Die Verbrennungskammer ist im divergenten Gehäuseabschnitt C durch den Gehäusemantel gebildet. Die Wasserstoffeinspritzung ist durch die im divergent geformten Gehäuseabschnitt C ringförmig angeordneten Einspritzöffnungen 10 für die Einspritzung von Wasserstoff gebildet, von denen in den Darstellungen der Fig. 2 und 4 aus darstellungstechnischen Gründen jeweils lediglich einzelne Einspritzöffnungen exemplarisch beziffert sind. Die Initiierung des Verbrennungsvorgangs erfolgt je nach den im spezifischen Anwendungskontext gegebenen Dichte- und Druckverhältnissen entweder als Selbstzündungsprozess oder mittels einer gesonderten Zündungseinrichtung (in den Darstellungen der Fig. 1 bis Fig. 4 nicht dargestellt).

Im Übergangsbereich vom konvergent geformten Gehäuseabschnitt B zum divergent geformten Gehäuseabschnitt C sind des Weiteren ringförmig angeordnete Auslassöffnungen 11 für die Abgabe von Wasser vorgesehen, von denen aus darstellungstechnischen Gründen lediglich einzelne Auslassöffnungen exemplarisch beziffert sind. Die Auslassöffnungen 11 dienen der Abgabe von beim Betrieb der mindestens der Brennstoffzelleneinheiten 9 entstehenden Wassers in den Luftstrom des Flugzeugtriebwerks 1. Das in den Brennstoffzelleneinheiten 9 beim Betrieb entstehende Verbrennungsprodukt Wasser wird durch die Abgabe in den Luftstrom während des Betriebs fortlaufend an die das Flugzeugtriebwerk umgebende Atmosphäre abgeben, wodurch das Flugzeug wird während des Fluges ständig leichter wird. In den Tanks des Flugzeugs vorhandener Wasserstoff wird als Brennstoff verbraucht, während das in den Brennstoffzelleneinheiten 9 als Reaktionsprodukt entstehende Wasser entsorgt wird. Die Entsorgung erfolgt besonders effektiv, indem die Abgabe im Bereich des Übergangs vom konvergenten zum divergenten Abschnitt des Gehäuses erfolgt, da hierbei eine unmittelbare Expansion des Fluidstroms erfolgt. Eine weitere Verbesserung der Massebilanz wird in diesem Zusammenhang erreicht, indem zusätzlich ein Teil des beim Betrieb der Brennstoffzelleneinheiten 9 als Verbrennungsprodukt entstehenden Wassers während des Fluges als Brauchwasser genutzt wird. Das in den Brennstoffzelleneinheiten 9 entstehende Wasser wird hierzu beim Betrieb in die Brauchwassertanks des Flugzeugs gepumpt (in den Darstellungen der Fig. 1 bis Fig. 4 nicht dargestellt).

Beim Betrieb des Flugzeugtriebwerks 1 erfolgt eine Zuschaltung und Nutzung des Verbrennungsantriebs lediglich während der Startphase des Flugzeugs neben dem Betrieb des Axialgebläses als zusätzlicher Nachbrenner, um eine für den Start des Flugzeugs erforderliche Gesamtschubkraft zu erzeugen. Ab dem Erreichen der gewünschten Reiseflughöhe wird der Verbrennungsantrieb abgeschaltet und der für den Reisebetrieb in im Wesentlichen gleichbleibender Flughöhe erforderliche Schub nur noch durch den Betrieb des das Axialgebläses erzeugt. Diese Betriebsweise ermöglicht den Vorteil, die Leistung des Axialgebläses und der Brennstoffzelleneinheiten 9 massebezogen auf den normalen Flugbetrieb hin optimieren zu können, da die während der Startphase erforderliche Maximalleistung durch die Zuschaltung des Wasserstoff-Nachbrenners erzeugt wird. Die Anordnung der beiden Antriebe in dem gemeinsamen Gehäuse 2 sind ist aufgrund der körperlichen Ausgestaltung zudem räumlich hochintegriert und hinsichtlich der Strömungsführung und Schubgenerierung optimiert. Die Integration eines wasserstoffbasierten Verbrennungsantriebs als Nachbrenner ist zudem wegen der zur brennstoffzellenbasierten Stromversogrung des elektrischen Axialgebläses ohnehin erforderlichen Anwesenheit von Wasserstoff systemeffizient. Die Lagerung, Bereitstellung und Zuführung eines gesonderten Verbrennungstreibstoffs für den nur in der Startphase genutzten Nachbrenner ist nicht erforderlich.

Die Speicherung des zum Betrieb der Brennstoffzelleneinheiten 9 erforderlichen Wasserstoffs erfolgt auf geeignete Weise in entsprechenden Tanks. Vorzugsweise erfolgt die Speicherung tiefkalt in flüssiger Form unter einem gleichzeitig gegenüber dem Außendruck je nach Anwendungsumgebung erhöhten Druck, beispielsweise einem Druck in Höhe von 6 Bar.

### Bezugszeichenliste

- A, B, C: Gehäuseabschnitte
- 1: Flugzeugtriebwerk
- 2: Gehäuse
- 3: Einlass
- 4: Auslass
- 5: Laufrad
- 6: Außenring
- 7: Permanentmagnet
- 8: Spulenmittel
- 9: Brennstoffzelleneinheit
- 10: Einspritzöffnung
- 11: Auslassöffnung

## Patentansprüche

1. Flugzeugtriebwerk (1), aufweisend ein Gehäuse (2) mit einem Einlass (3) und einem Auslass (4), ein benachbart zum Einlass (3) in einem ersten Gehäuseabschnitt angeordnetes Axialgebläse mit mindestens einem Laufrad (5), mindestens einen Elektromotor, der zum Antrieb des Laufrads (5) ausgebildet ist, mindestens eine Brennstoffzelleneinheit (9), die zur Stromversorgung des Elektromotors ausgebildet ist, sowie mindestens einen innerhalb des Gehäuses (2) dem Axialgebläse nachgelagert angeordneten Verbrennungsantrieb, wobei das Gehäuse (2) anschließend an den ersten Gehäuseabschnitt mit einem konvergenten Abschnitt und anschließend an den konvergenten Abschnitt mit einem divergenten Abschnitt ausgebildet ist, **dadurch gekennzeichnet, dass** der Verbrennungsantrieb eine Verbrennungskammer mit einer Wasserstoffeinspritzung (10) umfasst, welche innerhalb des divergenten Abschnitts angeordnet oder gebildet sind.

2. Flugzeugtriebwerk (1) nach Anspruch 1, **dadurch gekennzeichnet, dass** der mindestens eine Elektromotor Spulenmittel (8), die umfangsseitig des Laufrads (5) am oder im Gehäuse (2) angeordnet sind und Permanentmagnetmittel (7), die durch die Laufradschaufeln gebildet oder in einem umfangsseitigen Endabschnitt der Laufradschaufeln gebildet oder angeordnet oder die in einem die Laufwerkschaufeln umgreifenden Außenring (6) gebildet oder angeordnet sind, umfasst.

3. Flugzeugtriebwerk nach Anspruch 1 oder 2, **dadurch gekennzeichnet, dass** dem mindestens einen Laufrad (5) ein zweites, gegenläufig drehendes Laufrad (5) nachgeordnet ist.

4. Flugzeugtriebwerk (1) nach einem der Ansprüche 1 bis 3, **dadurch gekennzeichnet, dass** dem mindestens einen Laufrad (5) oder dem gegenläufig drehenden Laufradpaar ein Leitrad nachgeordnet ist.

5. Flugzeugtriebwerk (1) nach Anspruch 3 oder 4, **dadurch gekennzeichnet, dass** mehrere Laufrad-/Leitrad-Kombinationen oder Kombinationen aus gegenläufig drehenden Laufrädern mit oder ohne nachgeordnetem Leitrad innerhalb das ersten Gehäuseabschnitts hintereinander angeordnet sind.

6. Flugzeugtriebwerk (1) nach einem der Ansprüche 1 bis 5, **dadurch gekennzeichnet, dass** mindestens ein in das Gehäuse (2) integrierter oder als ein externes Bauteil ausgeführter, mit dem Flugzeugtriebwerk (1) zusammenwirkender Verdichter vorgesehen ist, mit dem der mindestens einen Brennstoffzelleneinheit (9) Luft mit einem gegenüber dem Umgebungsdruck erhöhten Druck zugeführt wird.

7. Flugzeugtriebwerk (1) nach Anspruch 6, **dadurch gekennzeichnet, dass** der Verdichter als ein axialer Endabschnitt eines vorhandenen Laufrades (5) oder durch ein gesondertes Laufrad (5) gebildet ist, das im ersten Gehäuseabschnitt angeordnet ist.

8. Flugzeugtriebwerk (1) nach Anspruch 7, **dadurch gekennzeichnet, dass** dem als Laufrad (5) ausgeführten Verdichter ein Leitrad nachgeordnet ist, welches als ein mit flüssigem Wasserstoff durchströmtes Bauteil ausgeführt ist.

9. Flugzeugtriebwerk (1) nach einem der Ansprüche 6 bis 8, **dadurch gekennzeichnet, dass** mindestens eine Ventileinrichtung vorgesehen ist, mit welcher der mindestens einen Brennstoffzelleneinheit (9) Wasserstoff mit einem gegenüber dem Umgebungsdruck erhöhten Druck zugeführt wird.

10. Flugzeugtriebwerk (1) nach Anspruch 9, **dadurch gekennzeichnet, dass** der Verdichter und die Ventileinrichtung derart eingerichtet sind, dass die Beaufschlagung der mindestens einen Brennstoffzelleneinheit mit Luft und Wasserstoff jeweils mit einem Druck von 2 Bar erfolgt.

11. Flugzeugtriebwerk (1) nach einem der Ansprüche 1 bis 10, **dadurch gekennzeichnet, dass** mindestens eine in das Gehäuse integrierte oder als ein externes Bauteil ausgeführte, mit dem Flugzeugtriebwerk zusammenwirkende Wärmetauscheinrichtung vorgesehen ist, in der Außenluft über oder durch ein oder mehrere mit flüssigem Wasserstoff durchströmte Bauteile geleitet und das hierbei entstehende Kondensat der der Brennstoffzelleneinrichtung zugeführten Luft beigemischt wird.

12. Flugzeugtriebwerk (1) nach einem der Ansprüche 1 bis 11, **dadurch gekennzeichnet, dass** die mindestens eine Brennstoffzelleneinheit (9) aus mehreren flachen, übereinander angeordneten und miteinander als Stapel verbundenen Brennstoffzellenschichten gebildet ist.

13. Flugzeugtriebwerk (1) nach Anspruch 12, **dadurch gekennzeichnet, dass** die mindestens eine Brennstoffzelleneinheit (9) im Querschnitt ring- oder kreisabschnittsförmig ausgebildet und eine oder mehrere derartige Brennstoffzelleneinheiten umfangsseitig am Gehäuse (2) angeordnet ist oder sind.

14. Flugzeugtriebwerk (1) nach einem der Ansprüche 1 bis 13, **dadurch gekennzeichnet, dass** im Bereich des Übergangs vom konvergenten zum divergenten Abschnitt eine Einrichtung (11) für die Einspritzung des beim Betrieb der mindestens einen Brennstoffzelleneinheit (9) entstehenden Wassers angeordnet ist.

## Claims

1. Aircraft engine (1), comprising a housing (2) having an inlet (3) and an outlet (4), an axial fan which is arranged adjacent to the inlet in a first housing section and has at least one impeller (5), at least one electric motor which is designed to drive the impeller, at least one fuel cell unit (9) which is designed to supply power to the electric motor, and at least one combustion drive arranged downstream of the axial fan within the housing, the housing being formed with a convergent section adjacent to the first housing section and with a divergent section adjacent to the convergent section, **characterized in that** the combustion drive comprises a combustion chamber with a hydrogen injection means (10), which are arranged or formed within the divergent section.

2. Aircraft engine according to claim 1, **characterized in that** the at least one electric motor comprises coil means (8) arranged circumferentially with respect to the impeller on or in the housing and permanent magnet means (7) formed by the impeller blades or formed or arranged in a circumferential end portion of the impeller blades or formed or arranged in an outer ring (6) surrounding the drive blades.

3. Aircraft engine according to claim 1 or 2, **characterized in that** a second, counter-rotating impeller is arranged downstream of the at least one impeller.

4. Aircraft engine according to any of claims 1 to 3, **characterized in that** a guide wheel is arranged downstream of the at least one impeller or the counter-rotating impeller pair.

5. Aircraft engine according to claim 3 or 4, **characterized in that** a plurality of impeller/guide wheel combinations or combinations of counter-rotating impellers with or without a downstream guide wheel are arranged one behind the other within the first housing section.

6. Aircraft engine according to any of claims 1 to 5, **characterized in that** at least one compressor is provided which is integrated into the housing or designed as an external component and interacts with the aircraft engine, and by means of which air is supplied to the at least one fuel cell unit at a pressure greater than the ambient pressure.

7. Aircraft engine according to claim 6, **characterized in that** the compressor is formed as an axial end portion of an existing impeller or by a separate impeller arranged in the first housing section.

8. Aircraft engine according to claim 7, **characterized in that** a guide wheel, which is designed as a component through which liquid hydrogen flows, is arranged downstream of the compressor, which is designed as an impeller.

9. Aircraft engine according to any of claims 6 to 8, **characterized in that** at least one valve device is provided, by means of which hydrogen is supplied to the at least one fuel cell unit at a pressure greater than the ambient pressure.

10. Aircraft engine according to claim 9, **characterized in that** the compressor and the valve device are designed such that the at least one fuel cell unit is supplied with air and hydrogen at a pressure of 2 bar in each case.

11. Aircraft engine according to any of claims 1 to 10, **characterized in that** at least one heat exchange device is provided which is integrated into the housing or designed as an external component and interacts with the aircraft engine, and in which outside air is passed over or through one or more components through which liquid hydrogen flows, and the condensate thus formed is mixed with the air supplied to the fuel cell device.

12. Aircraft engine according to any of claims 1 to 11, **characterized in that** the at least one fuel cell unit is formed from a plurality of flat fuel cell layers arranged one above the other and connected to one another as a stack.

13. Aircraft engine according to claim 12, **characterized in that** the at least one fuel cell unit is ring-shaped or circular-segment-shaped in cross-section and one or more such fuel cell units is or are arranged circumferentially on the housing.

14. Aircraft engine according to any of claims 1 to 13, **characterized in that** a device for injecting the water produced during operation of the at least one fuel cell unit is arranged in the region of the transition from the convergent to the divergent section.

## Revendications

1. Moteur d'aéronef (1), présentant un carter (2) comportant une entrée (3) et une sortie (4), une soufflante axiale disposée à proximité de l'entrée dans une première section de carter et comportant au moins une roue mobile (5), au moins un moteur électrique qui est configuré pour l'entraînement de la roue mobile, au moins une unité à piles à combustible (9) qui est configurée pour l'alimentation en courant du moteur électrique, ainsi qu'au moins un entraînement à combustion disposé à l'intérieur du carter en aval de la soufflante axiale, dans lequel le carter est formé à la suite de la première section de carter avec une section convergente et à la suite de la section convergente avec une section divergente, **caractérisé en ce que** l'entraînement à combustion comprend une chambre de combustion comportant une injection d'hydrogène (10) qui sont disposées ou formées à l'intérieur de la section divergente.

2. Moteur d'aéronef selon la revendication 1, **caractérisé en ce que** l'au moins un moteur électrique comprend des moyens formant bobines (8) disposés sur ou dans le carter sur la circonférence de la roue mobile et des moyens formant aimants permanents (7) formés par les aubes de roue mobile ou formés ou disposés dans une section d'extrémité circonférentielle des aubes de roue mobile ou formés ou disposés dans une bague extérieure (6) entourant les aubes de roue mobile.

3. Moteur d'aéronef selon la revendication 1 ou 2,
**caractérisé en ce qu'**une seconde roue mobile tournant en sens inverse est disposée en aval de l'au moins une roue mobile.

4. Moteur d'aéronef selon l'une des revendications 1 à 3,
**caractérisé en ce qu'**une roue directrice est disposée en aval de l'au moins une roue mobile ou de la paire de roues mobiles tournant en sens inverse.

5. Moteur d'aéronef selon la revendication 3 ou 4, **caractérisé en ce que** plusieurs combinaisons roue mobile/roue directrice ou combinaisons de roues mobiles tournant en sens inverse avec ou sans roue directrice disposée en aval sont disposées les unes derrière les autres à l'intérieur de la première section de carter.

6. Moteur d'aéronef selon l'une des revendications 1 à 5,
**caractérisé en ce qu'**au moins un compresseur intégré dans le carter ou réalisé sous la forme d'un composant externe et coopérant avec le moteur d'aéronef est prévu, au moyen duquel compresseur de l'air est amené à l'au moins une unité à piles à combustible à une pression supérieure à la pression ambiante.

7. Moteur d'aéronef selon la revendication 6, **caractérisé en ce que** le compresseur est formé sous forme de section d'extrémité axiale d'une roue mobile existante ou par une roue mobile séparée disposée dans la première section de carter.

8. Moteur d'aéronef selon la revendication 7, **caractérisé en ce qu'**une roue directrice est disposée en aval du compresseur réalisé sous forme de roue mobile, laquelle roue directrice est réalisée sous forme de composant traversé par de l'hydrogène liquide.

9. Moteur d'aéronef selon l'une des revendications 6 à 8,
**caractérisé en ce qu'**au moins un dispositif à soupape est prévu, avec lequel de l'hydrogène est amené à l'au moins une unité à piles à combustible à une pression supérieure à la pression ambiante.

10. Moteur d'aéronef selon la revendication 9, **caractérisé en ce que** le compresseur et le dispositif à soupape sont conçus de telle sorte que l'alimentation de l'au moins une unité à piles à combustible en air et en hydrogène est effectué respectivement à une pression de 2 bar.

11. Moteur d'aéronef selon l'une des revendications 1 à 10,
**caractérisé en ce qu'**au moins un dispositif d'échange de chaleur intégré dans le carter ou réalisé sous forme de composant externe et coopérant avec le moteur d'aéronef est prévu, dans lequel dispositif l'air extérieur est guidé sur ou à travers un ou plusieurs composants traversés par de l'hydrogène liquide et le condensat ainsi formé est mélangé à l'air amené au dispositif à piles à combustible.

12. Moteur d'aéronef selon l'une des revendications 1 à 11,
**caractérisé en ce que** l'au moins une unité à piles à combustible est formée de plusieurs couches de piles à combustible plates, disposées les unes au-dessus des autres et reliées entre elles sous forme d'empilement.

13. Moteur d'aéronef selon la revendication 12, **caractérisé en ce que** l'au moins une unité à piles à combustible est réalisée en forme d'anneau ou de segment de cercle en section transversale et une ou plusieurs unités à piles à combustible de ce type est ou sont disposées sur la circonférence du carter.

14. Moteur d'aéronef selon l'une des revendications 1 à 13,
**caractérisé en ce qu'**un dispositif pour l'injection de l'eau produite lors du fonctionnement de l'au moins une unité à piles à combustible est disposé dans la zone de transition entre la section convergente et la section divergente.
